# EUROPÄISCHE PATENTSCHRIFT

(11) **EP 0 780 282 B1**
(45) Veröffentlichungstag und Bekanntmachung des Hinweises auf die Patenterteilung: **05.09.2001**
(21) Anmeldenummer: 96118150.0
(22) Anmeldetag: 13.11.1996
(51) Int. Cl.: B62D 25/06, B60J 7/02

(54) **Fahrzeugdach mit einem Dachausschnitt**
Vehicle roof with a roof cutout
Toit de véhicule ayant une encoche

(30) Priorität: 20.12.1995 DE 19547776
(43) Veröffentlichungstag der Anmeldung: 25.06.1997
(73) Patentinhaber: Bayerische Motoren Werke Aktiengesellschaft, 80788 München (DE)
(72) Erfinder: Bödigheimer, Reimund, 85391 Allershausen (DE); Kempinger, Konrad, 83052 Bruckmühl (DE)

(56) Entgegenhaltungen:
- EP-A- 0 200 084
- DE-A- 2 409 562
- DE-A- 3 505 831
- DE-A- 4 024 837
- DE-C- 1 158 389
- GB-A- 1 038 236

## Beschreibung

Die Erfindung betrifft ein Fahrzeugdach mit einem Dachausschnitt, mit den jeweils im Oberbegriff der unabhängigen Patentansprüche 1 und 2 angegebenen Merkmalen.

Ein derartiges Fahrzeugdach ist in der DE-A-40 24 837 mit einem Schiebedach-Verstärkungsrahmen gefertigt, der unter dem Dachaussenblech angeordnet und über eine Klebeverbindung mit dem Dachaussenblech zu einem separaten Dachteil verbunden ist. Dieses Dachteil wird über eine weitere Klebeverbindung mit der Lasche eines Seitenrahmenteiles verbunden, die seitlich nach innen absteht und durch Überlagerung eines äusseren und eines inneren Seitenrahmenteiles gebildet ist. Die Dicke der jeweiligen Klebstoffschicht hängt von der etwa vertikalen Kraft ab, mit der die betreffenden Teile zueinander belastet werden. Da diese Kraft bei der Serienfertigung von Fahrzeugdächern unterschiedlich sein dürfte, ist durch die Klebeverbindungen der Abstand des Aussenbleches und des Verstärkungsrahmens voneinander und zur Lasche des Seitenrahmenteiles nicht genau festgelegt. Das Aussenblech bildet ausserdem einen gewölbten Randbereich, der das Seitenrahmenteil seitlich aussen übergreift. Die für eine Schweißverbindung mit dem Seitenrahmenteil vorgesehene Anlagefläche ist deshalb genau an die für eine Klebstoffverbindung vorgesehenen Flächen anzupassen. Bei der Annäherung der durch das Aussenblech und den Verstärkungsrahmen gebildeten Dachteile an die Klebeverbindungsstelle des Seitenrahmenteiles dürfen an dem Dachteil keine veränderlichen Kräfte oder Momente wirken, da diese Dachverformungen bzw. nach einer Entlastung Dachbewegungen verursachen können, die sich ungünstig auf die Klebeverbindungen auswirken. Für das Aushärten der Klebeverbindungen ist eine entsprechende Zeitdauer erforderlich, in der das Fahrzeugdach nicht belastet und damit nicht weiter bearbeitet werden kann.

Bei der GB-A-1 038 236 ist an der Unterseite eines Seitenrahmenteiles des Fahrzeugdaches ein Verstärkungsrahmen vorgesehen, der unter Verwendung eines Metallklebers an dem Seitenrahmenteil angeklebt ist. Das Fahrzeugdach ist mit einem Schiebedach versehen, das eine Dachkassette aufweist, die unter dem Dachaussenblech mittels Nieten an dem Verstärkungsrahmen befestigt ist. Der Verstärkungsrahmen und das Dachaussenblech weisen im Randbereich einer Dachöffnung nach unten gerichtete Flansche auf, die lediglich in zwei Lagen miteinander verschweißt sind. Ein Verschweißen des seitlich äusseren Bereiches des Verstärkungsrahmens mit dem eine sichtbare Aussenfläche bildenden Aussenblech ist nicht vorgesehen. Ein Schweißvorgang in diesem Bereich würde eine von aussen sichtbare Unebenheit verursachen, die störend wirkt. Zur Vermeidung einer derartigen Unebenheit müsste das Fahrzeug mit einem erheblichen Arbeitsaufwand nachgearbeitet werden.

Der Erfindung liegt die Aufgabe zugrunde, ein Fahrzeugdach jeweils nach dem Oberbegriff der unabhängigen Patentansprüche 1 und 2 anzugeben, das lagegenauer und einfacher zu fertigen ist.

Diese Aufgabe ist jeweils durch die unabhängigen Patentansprüche 1 und 2 gelöst. Vorteilhafte Ausgestaltungen der Erfindung sind den Unteransprüchen entnehmbar.

Die beiden unabhängigen Patentansprüche 1 und 2 gehen von einem Fahrzeugdach mit vier Teilen aus, die durch ein äusseres Seitenrahmenteil, ein inneres Seitenrahmenteil, ein Aussenblech und einen Verstärkungsrahmen gebildet sind. In dem Aussenblech ist eine von einem Deckel verschließbare Dachöffnung ausgebildet. Um das Fahrzeugdach einfacher und lagegenauer montieren zu können, sind das äussere und das innere Seitenrahmenteil zu einem Dachlängsträger verbunden, bei dem die beiden Seitenrahmenteile einen seitlich nach innen gerichteten Flansch bilden. Die beiden anderen Teile, das Aussenblech und der darunter angeordnete Verstärkungsrahmen sind zu einer separaten Montageeinheit verbunden, die besonders biege- und torsionssteif ist, da der Verstärkungsrahmen seitlich bis etwa zu dem Flansch verläuft, an dem der Seitenrand mit dem äusseren und inneren Seitenrahmenteil in drei Lagen übereinander verschweißt sind.

Die unabhängigen Patentansprüche 1 und 2 unterscheiden sich im wesentlichen durch die Verbindung des Verstärkungsrahmens mit dem Aussenblech. Während beim unabhängigen Patentanspruch 1 vom Verstärkungsrahmen seitlich nach aussen vorstehende Befestigungslaschen in zugeordnete Vertiefungen im Flansch eingreifen und im Bereich der Vertiefungen mit dem Aussenblech verschweißt sind, verläuft nach dem unabhängigen Patentanspruch 2 der Seitenrand des Verstärkungsrahmens bis zu einer etwa vertikalen Seitenwand des Aussenbleches und ist mit dieser Seitenwand verschweißt.

Die vier Dachteile sind somit jeweils so miteinander verbunden, dass an keiner Schweißstelle vier Blechlagen übereinander zu verschweißen sind. Jeweils zwei der vier Dachteile sind zu einer Baueinheit verbunden, die einfacher und genauer zu fertigen bzw. miteinander zu einem Fahrzeugdach zu verbinden sind, das eine hohe Biege- und Torsionssteifigkeit aufweist. Ausserdem befinden sich alle Schweißstellen in Bereichen, die von aussen nicht sichtbar sind bzw. leicht abgedeckt werden können, so dass die Schweißverbindungen keine optischen Störungen in den sichtbaren Aussenflächen verursachen.

Zwei Ausführungsbeispiele der Erfindung werden anhand einer Zeichnung näher erläutert. Es zeigen
- Figur 1: ein erstes Ausführungsbeispiel in einem Querschnitt durch eine in dem Flansch des Seitenrahmenteiles gebildete Vertiefung,
- Figur 2: ein Figur 1 entsprechender Querschnitt durch eine drei Lagen verbindende Punktschweißverbindung,
- Figur 3: eine Ansicht auf eine Vertiefung in Pfeilrichtung III in Figur 1 und
- Figur 4: ein zweites Ausführungsbeispiel mit an einer vertikalen Seitenwand des Außenbleches befestigtem Verstärkungsrahmen.

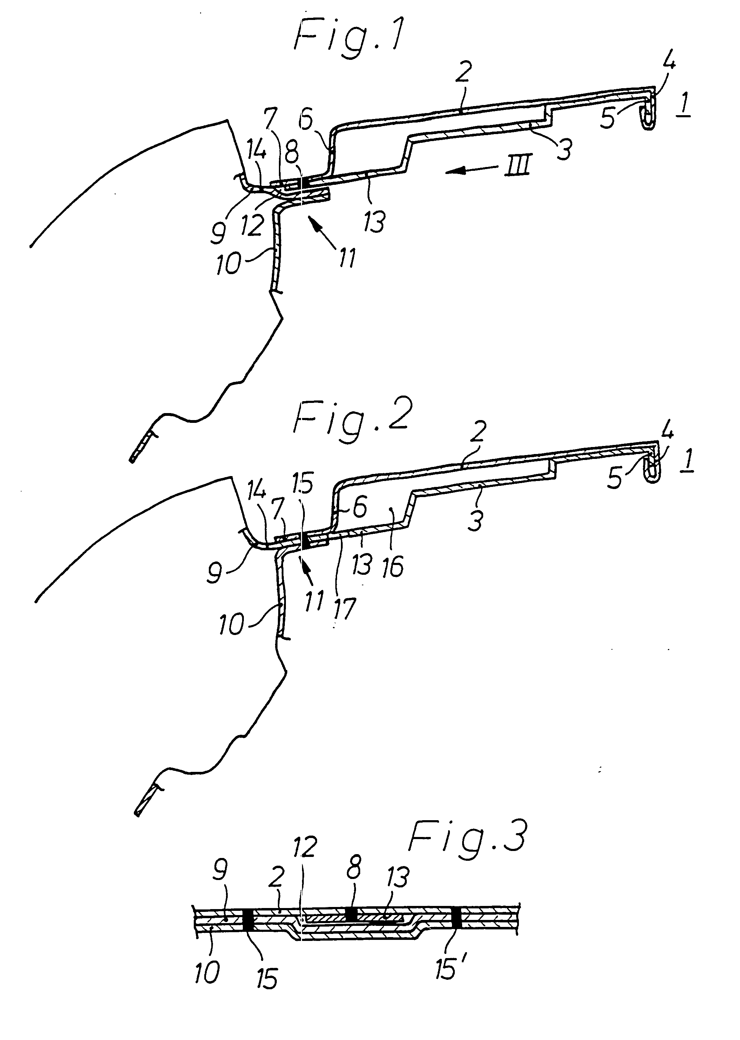

Das in Figur 1 in einem Querschnitt durch einen Seitenbereich dargestellte Fahrzeugdach eines Kraftfahrzeugs weist einen von einem nicht dargestellten Deckel eines Schiebehebedaches verschließbaren Dachausschnitt 1 auf, der in einem Außenblech 2 gebildet ist. Ein unter dem Außenblech 2 angeordneter Verstärkungsrahmen 3 umschließt den Dachausschnitt 1 und ist innen beispielsweise von einem nach unten abgestellten Rand 4 des Außenbleches 2 festgehalten, der um einen von dem Verstärkungsrahmen 3 nach unten abstehenden Arm 5 herumgebogen ist. In dem dargestellten Querschnitt ist der Verstärkungsrahmen 3 doppelstufenförmig ausgebildet und liegt unmittelbar neben dem Dachausschnitt 1 von unten an dem Außenblech 2 an. Das Außenblech 2 bildet im Seitenbereich durch zwei entgegengesetzte Abwinkelungen eine etwa vertikale Seitenwand 6 und einen etwa horizontal nach außen abstehenden Seitenrand 7. Der Verstärkungsrahmen 3 verläuft vom seitlichen Rand 4 des Dachausschnitts 1 zu dem Seitenrand 7 des Außenbleches 2 und liegt von unten an diesem Seitenrand 7 an. An der Überlappungsstelle des Seitenrandes 7 mit dem Verstärkungsrahmen 3 ist das Außenblech 2 über eine Punktschweißung 8 mit dem Verstärkungsrahmen 2 verbunden, wodurch ein separates Dachteil gebildet ist. Die Punktschweißung 8 ist in einem separaten Vormontagevorgang von der übrigen Karosserie des Fahrzeugs entfernt ausgeführt. Ein äußeres Seitenrahmenteil 9 und ein inneres Seitenrahmenteil 10 bilden an einer innenliegenden Überlappungsstelle einen Flansch 11. In Fahrzeuglängsrichtung des Flansches 11 sind mehrere Vertiefungen 12 gebildet. Der Verstärkungsrahmen 3 weist seitlich nach außen gerichtete Befestigungslaschen 13 auf, die über die Punktschweißung 8 und vergleichbare weitere Punktschweißungen mit dem Seitenrand 7 des Außenbleches 2 verbunden sind. Bei der Annäherung des durch das Außenblech 2 und den Verstärkungsrahmen 3 gebildeten Dachteiles von oben legt sich an jeder Fahrzeugseite der betreffende Seitenrand 7 von oben an eine durch das äußere Seitenrahmenteil 9 gebildete Auflagefläche 14 an und der äußere Bereich der betreffenden Befestigungslasche 13 greift in die zugeordnete Vertiefung 12 ein, die tiefer als die Dicke der Befestigungslasche 13 gebildet ist und mit nicht dargestellten Zentrierwänden die betreffende Befestigungslasche 13 zentriert.

Wie aus Figur 2 hervorgeht, liegen in dem dargestellten, in Fahrzeuglängsrichtung zwischen zwei Befestigungslaschen 13 befindlichen Schweißbereich der Seitenrand 7 des Außenbleches 2 sowie das äußere Seitenrahmenteil 9 und das innere Seitenrahmenteil 10 im Bereich des Flansches 11 übereinander und bilden drei Lagen, die durch eine einzige Punktschweißung 15 verbunden sind. Der Verstärkungsrahmen 3 ist in diesem Bereich so seitlich nach innen zurückversetzt ausgebildet, daß der von dem Außenblech 2 und dem Verstärkungsrahmen 3 gebildete Hohlraum 16 über Öffnungen 17 unten offen ist.

Der Prinzipskizze gemäß Figur 3, die eine Ansicht auf die Vertiefung 12 in Pfeilrichtung III in Figur 1 darstellt, sind weitere Einzelheiten, beispielsweise die Lagen von jeweils drei Blechschichten verbindenden Punktschweißungen 15, 15' und der das Außenblech 2 mit der Befestigungslasche 13 des Verstärkungsrahmens 3 verbindenden Punktschweißung 8 entnehmbar.

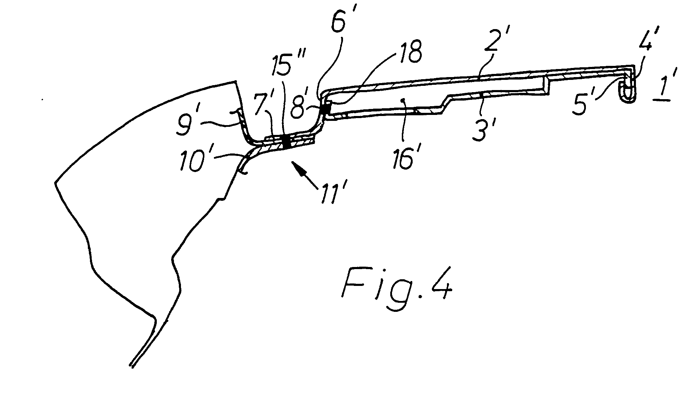

Bei dem zweiten Ausführungsbeispiel gemäß Figur 4 ist das Fahrzeugdach ähnlich wie bei dem Ausführungsbeispiel gemäß den Figuren 1 bis 3 gebildet. Zur Vermeidung einer wiederholten Beschreibung sind zwischen den beiden Ausführungsbeispielen vergleichbare Teile mit gleichen Bezugszahlen und bei dem Ausführungsbeispiel gemäß Figur 4 zusätzlich mit einem hochgestellten Zeichen versehen. Bei dieser zweiten Ausführung sind in dem Flansch 11' keine Vertiefungen ausgebildet. Der Seitenrand 7' liegt von oben an dem durch das äußere Seitenrahmenteil 9' und das innere Seitenrahmenteil 10' gebildeten Flansch 11' an und bildet mit diesen Teilen drei Lagen, die durch eine einzige Punktschweißung 15" verbunden sind. Der Verstärkungsrahmen 3' weist an seinem äußeren Seitenrand eine in der Figur nach oben oder in anderer Weise nach unten abgewinkeltem Randbereich 18 auf, der an der Seitenwand 6' des Außenbleches 2' von innen anliegt und über eine Punktschweißung 8' mit der Seitenwand 6' verbunden ist.

Bei beiden Ausführungsbeispielen ist durch die stufenförmige Ausbildung des Verstärkungsrahmens der Randbereich des Dachausschnittes verstärkt und durch die einen Hohlraum einschließende Ausbildung des Außenbleches und des Verstärkungsrahmens die Biege- und Torsionssteifigkeit des Fahrzeugdaches erhöht, ohne den zur Aufnahme von Teilen der Verstellmechanik eines Schiebehebedaches erforderlichen Bauraum im Randbereich des Dachausschnittes einzuschränken. An dem Verstärkungsrahmen liegt bei den Ausführungsbeispielen von unten ein nicht dargestelltes Rahmenteil einer Schiebehebedachkassette an und ist über Verbindungsmittel mit dem Verstärkungsrahmen verbunden. In Abänderung der Ausführungsbeispiele kann ein zur Schweißung vorgesehener Flansch auch lediglich durch das äußere Seitenrahmenteil oder das innere Seitenrahmenteil gebildet sein. Die Form des Außenbleches und des Verstärkungsrahmens bzw. der Seitenrahmenteile ist an sich beliebig. Bei beiden Ausführungsbeispielen ist durch das äußere Seitenrahmenteil, die drei über eine Punktschweißung verbundene Lagen und eine Seitenwand des Außenbleches eine Rinne gebildet, die von einer nicht dargestellten Deckelleiste von oben verschlossen ist, die beispielsweise über ein zentrales Steckelement mit dem Seitenrand des Außenbleches kraft- oder formschlüssig zu verbinden ist. Die Schweißung kann eine Punktschweißung, eine Laserschweißung oder eine Schutzgasschweißung oder dergleichen sein. Die Auswahl der Schweißstellen ist an sich beliebig vorzugeben.

## Patentansprüche

1. Fahrzeugdach mit einem von einem Deckel verschließbaren Dachausschnitt (1) in einem Außenblech (2), unter dem ein den Dachausschnitt (1) umgebender Verstärkungsrahmen (3) angeordnet und mit einem Seitenrand (7) des Außenbleches (2) verbunden ist, der mit einem seitlich nach innen gerichteten Flansch (11) verbunden ist, der von einem äußeren und inneren Seitenrahmenteil (9,10) gebildet ist, die in Fahrzeuglängsrichtung verlaufen, **dadurch gekennzeichnet**, daß in dem Flansch (11) Vertiefungen (12) ausgebildet sind und der Verstärkungsrahmen (3) seitlich nach außen gerichtete Befestigungslaschen (13) aufweist, die jeweils seitlich in eine Vertiefung (12) eingreifen und in der Vertiefung (12) mit dem Seitenrand (7) verschweißt sind, der in Fahrzeuglängsrichtung vor oder hinter der Vertiefung (12) mit dem inneren und äußeren Seitenrahmenteil (9, 10) drei Lagen bildet, die durch eine Schweißung miteinander verbunden sind.

2. Fahrzeugdach mit einem von einem Deckel verschließbaren Dachausschnitt (1') in einem Außenblech (2'), unter dem ein den Dachausschnitt umgebender Verstärkungsrahmen (3') angeordnet und mit einer Seitenwand des Außenbleches (2') verbunden ist, wobei ein Seitenrand (7') des Außenbleches (2') mit einem seitlichen nach innen gerichteten Flansch (11') verbunden ist, der von einem äußeren (9') und inneren Seitenrahmenteil (10') gebildet ist, die in Fahrzeuglängsrichtung verlaufen, **dadurch gekennzeichnet**, daß das äußere und das innere Seitenrahmenteil (9', 10') und der Seitenrand (7') des Außenbleches (2') im Bereich des Flansches (11') in drei Lagen übereinander verschweißt sind und das äußere Seitenrahmenteil (9') und das Außenblech (2') separat gefertigte Teile sind, sowie die Seitenwand (6') durch einen im äußeren Seitenbereich des Außenbleches (2') etwa vertikal nach unten abgewinkelten Bereich des Außenbleches (2') gebildet ist und der Verstärkungsrahmen (3') seitlich innen an der Seitenwand (6') anliegend mit der Seitenwand (6') verschweißt ist.

3. Fahrzeugdach nach Anspruch 1 oder 2, **dadurch gekennzeichnet**, daß die Schweißung eine Punktschweißung, eine Laserschweißung oder Schutzgasschweißung oder dergleichen ist.

4. Fahrzeugdach nach einem der Ansprüche 1 bis 3, **dadurch gekennzeichnet**, daß der Verstärkungsrahmen (3, 3') vom seitlichen Rand (4, 4') des Dachausschnittes (1, 1') zu der Seitenwand (6') bzw. zu dem Seitenrand (7) des Außenbleches (2 bzw. 2') verläuft.

5. Fahrzeugdach nach einem der Ansprüche 1 bis 4, **dadurch gekennzeichnet**, daß die Seitenwand (Seitenrand 7, 7') etwa horizontal verläuft.

6. Fahrzeugdach nach einem der Ansprüche 1 bis 5, **dadurch gekennzeichnet**, daß der Seitenrand (7, 7') des Außenbleches (2, 2') und gegebenenfalls die Befestigungslaschen (13) des Verstärkungsrahmens (3) etwa horizontal verlaufen.

7. Fahrzeugdach nach einem der Ansprüche 1 bis 6, bei dem das Außenblech und der Verstärkungsrahmen seitlich neben dem Dachausschnitt einen Hohlraum bilden, **dadurch gekennzeichnet**, daß der Verstärkungsrahmen (3, 3') stufenförmig ausgebildet ist, unmittelbar neben dem Dachausschnitt (1, 1') von innen an dem Außenblech (2, 2') anliegt und in einem äußeren Seitenbereich mit dem Außenblech (2, 2') den Hohlraum (16, 16') bildet.

8. Fahrzeugdach nach Anspruch 7, **dadurch gekennzeichnet**, daß der Hohlraum (16) zwischen den auf einer Fahrzeugseite angeordneten Befestigungslaschen (13) unten offen ist.

9. Fahrzeugdach nach Anspruch 7 oder 8, **dadurch gekennzeichnet**, daß der Verstärkungsrahmen (3, 3') im Bereich des Hohlraumes (16, 16') mit einem Rahmenteil einer Schiebehebedachkassette verbunden ist, das von unten an dem Verstärkungsrahmen (3, 3') anliegt.

## Claims

1. A vehicle roof comprising an opening (1) closable by a cover in a metal outer sheet (2) below which a reinforcing frame (3) is disposed around the roof opening (1) and is connected to a side edge (7) of the outer sheet (2), which is connected to a laterally inwardly extending flange (11) formed by an outer and inner side frame part (9, 10) which extend in the longitudinal direction of the vehicle, **characterised in that** recesses (12) are formed in the flange (11) and the reinforcing frame (3) has laterally outwardly directed fastening lugs (13) each of which engage laterally in a recess (12) and are welded therein to the side edge (7), which forms three layers with the inner and outer side frame part (9, 10) before or behind the recess (12) in the longitudinal direction of the vehicle, the layers being connected by welding.

2. A vehicle roof comprising an opening (1') closable by a cover in a metal outer sheet (2') under which a reinforcing frame (3') is disposed surrounding the roof portion (1') and is connected to a side wall of the outer sheet (2'), wherein a side wall (7') of the outer sheet (2') is connected to a laterally inwardly directed flange (11') formed by an outer side frame part (9') and an inner side frame part (10') which extend in the longitudinal direction of the vehicle, **characterised in that** the outer and the inner side frame part (9', 10') and the side edge (7') of the outer sheet (2') are welded together in three layers in the region of the flange (11'), and the outer side frame part (9') and the outer sheet (2') are separately produced parts, and the side wall (6') is formed by a region of the outer sheet (2') which is bent substantially vertically downwards in the outer side region of the outer sheet (2'), and the reinforcing frame (3') laterally and internally adjoins the side wall (6') and is welded thereto.

3. A vehicle roof according to claim 1 or claim 2, **characterised in that** the weld is a spot weld, a laser weld, a shielded arc weld or the like.

4. A vehicle roof according to any of claims 1 to 3, **characterised in that** the reinforcing frame (3, 3') extends from the side edge (4, 4') of the roof opening (1, 1') to the side wall (6') or to the side edge (7) of the outer sheet (2 or 2').

5. A vehicle roof according to any of claims 1 to 4, **characterised in that** the side wall (side edge 7, 7') is approximately horizontal.

6. A vehicle roof according to any of claims 1 to 5, **characterised in that** the side edge (7, 7') of the outer sheet (2, 2') and if required the fastening lugs (13) of the reinforcing frame (3) extend approximately horizontally.

7. A vehicle roof according to any of claims 1 to 6, wherein the outer sheet and the reinforcing frame form a cavity laterally near the roof opening, **characterised in that** the reinforcing frame (3, 3') is stepped, abuts the outer sheet (2, 2') internally, immediately adjoining the roof portion (1, 1') and co-operates with the outer sheet (2, 2') in an outer side region to form the cavity (16, 16').

8. A vehicle roof according to claim 7, **characterised in that** the cavity (16) is downwardly open between the fastening lugs (13) disposed on one side of the vehicle.

9. A vehicle roof according to claim 7 or claim 8, **characterised in that** in the region of the cavity (16, 16') the reinforcing frame (3, 3') is connected to a frame part of a sliding and lifting roof bay which abuts the reinforcing frame (3, 3') from beneath.

## Revendications

1. Toit de véhicule présentant une découpe de toit (1) obturable par un couvercle et pratiquée dans une tôle extérieure (2) en dessous de laquelle est monté un cadre de renforcement (3) entourant la découpe (1) et relié à un bord latéral (7) de la tôle (2), toit qui est relié avec une bride (11) marginale dirigée vers l'intérieur et composée d'une partie externe et d'une partie interne de cadre latéral (9, 10) disposées selon la direction longitudinale du véhicule,
**caractérisé en ce que**
dans la bride (11) sont formés des renfoncements (12) et le cadre de renforcement (3) présente des pattes de fixation (13) latéralement dirigées vers l'extérieur et dont chacune est engagée dans un renfoncement (12) où elle est soudée au bord latéral (7) qui forme devant ou derrière le renfoncement (12) par rapport à la direction longitudinale du véhicule, avec la partie interne et externe de cadre latéral (9, 10) trois couches reliées entre elles par une soudure.

2. Toit de véhicule présentant une découpe de toit (1') obturable par un couvercle et pratiquée dans une tôle extérieure (2') en dessous de laquelle est monté un cadre de renforcement (3') entourant la découpe (1') et relié à une paroi latérale de la tôle (2'), un bord latéral (7') de la tôle extérieure (2') étant relié à une bride latérale (11') dirigée vers l'intérieur et constituée par une partie externe (9') et une partie interne (10') de cadre latéral, disposées selon la direction longitudinale du véhicule,
**caractérisé en ce que**
les parties externe et interne (9', 10') de cadre latéral et le bord latéral (7') de la tôle extérieure (2') forment, dans la zone de la bride (11'), trois couches superposées qui sont soudées entre elles, la partie externe (9') et la tôle extérieure (2') étant des pièces fabriquées séparées, tandis que la paroi latérale (6') est constituée par une partie de zone latérale extérieure de la tôle (2'), coudée à peu près verticalement vers le bas, et que le cadre de renforcement (3') est appliqué latéralement vers l'intérieur sur la paroi latérale (6') et soudé à celle-ci.

3. Toit de véhicule selon la revendication 1 ou 2,
**caractérisé en ce que**
la soudure est une soudure par points, une soudure effectuée au laser ou sous protection gazeuse ou analogue.

4. Toit de véhicule selon l'une quelconque des revendications 1 à 3,
**caractérisé en ce que**
le cadre de renforcement (3, 3') s'étend du bord latéral (4, 4') de la découpe de toit (1, 1') jusqu'à la paroi latérale (6') ou au bord latéral (7) de la tôle extérieure (2, 2').

5. Toit de véhicule selon l'une quelconque des revendications 1 à 4,
**caractérisé en ce que**
la paroi latérale (bord latéral 7, 7') est sensiblement horizontale.

6. Toit de véhicule selon l'une quelconque des revendications 1 à 5,
**caractérisé en ce que**
le bord latéral (7, 7') de la tôle extérieure (2, 2') et éventuellement les pattes de fixation (13) du cadre de renforcement (3) sont sensiblement horizontaux.

7. Toit de véhicule selon l'une quelconque des revendications 1 à 6, dans lequel la tôle extérieure et le cadre de renforcement forment latéralement à côté de la découpe de toit un volume creux,
**caractérisé en ce que**
le cadre de renforcement (3, 3') présente des gradins, il est appliqué directement près de la découpe de toit (1,1'), de l'intérieur sur la tôle extérieure (2, 2') et, dans une zone latérale externe, il forme avec la tôle extérieure (2, 2') la volume creux (16, 16').

8. Toit de véhicule selon la revendication 7,
**caractérisé en ce que**
le volume creux (16) est ouvert vers le bas, entre les pattes de fixation (13) montées sur un côté de véhicule.

9. Toit de véhicule selon l'une des revendications 7 ou 8,
**caractérisé en ce que**
le cadre de renforcement (3, 3'), dans la zone du volume creux (16, 16') est relié à une partie de cadre d'un caisson de toit coulissant appliqué par-dessous sur le cadre de renforcement (3, 3').
